# FASCICULE DE BREVET EUROPEEN

(11) **EP 3 630 587 B1**
(45) Date de publication et mention de la délivrance du brevet: **17.03.2021**
(21) Numéro de dépôt: 18721433.3
(22) Date de dépôt: 12.04.2018
(51) Int. Cl.: B62D 29/00, B62D 21/11

(54) **PROFILE EN ALLIAGE METALLIQUE EXTRUDE POUR UNE STRUCTURE PORTEUSE D'UN VEHICULE AUTOMOBILE**
EXTRUDIERTES METALLLEGIERUNGSPROFIL FÜR EINE TRÄGERSTRUKTUR EINES KRAFTFAHRZEUGS
EXTRUDED METAL ALLOY PROFILE FOR A SUPPORTING STRUCTURE OF A VEHICLE

(30) Priorité: 30.05.2017 FR 1754718
(43) Date de publication de la demande: 08.04.2020
(73) Titulaire: PSA Automobiles SA, 78300 Poissy (FR)
(72) Inventeur: CADET, Bruno, 25700 Valentigney (FR)
(86) Numéro de dépôt international: PCT/FR2018/050930
(87) Numéro de publication internationale: WO 2018/220302

(56) Documents cités:
- WO-A1-2014/191655
- FR-A1- 2 986 489
- FR-A1- 3 037 305
- US-A1- 2015 266 511

## Description

La présente invention concerne un profilé réalisé en alliage métallique extrudé, pour une structure porteuse d'un véhicule automobile, ainsi qu'une structure porteuse et un véhicule automobile équipés d'un tel profilé.

Un type de berceau avant connu pour véhicule automobile, présenté notamment par le document FR-B1-2986489, forme une structure porteuse prévue pour supporter le groupe motopropulseur ainsi que des éléments de la suspension et de la direction du train avant.

Le berceau comporte une traverse recevant à chaque extrémité une pièce de liaison présentant des fixations venant sur la caisse du véhicule. La traverse et les pièces de liaison sont réalisées avec des profilés formés par extrusion d'un alliage d'aluminium, comportant une direction d'extrusion qui dans le véhicule est la direction transversale.

Les profilés extrudés peuvent présenter dans la longueur transversale des arêtes vives venant de l'extrusion, notamment des angles droits raccordant des surfaces planes, qui posent alors des problèmes de sécurité pour les opérateurs réalisant l'assemblage du véhicule ou des interventions en service après-vente. Un choc de la main sur ces arêtes vives lors de travaux dans le compartiment moteur, en particulier lors d'opérations de vissage, peut blesser les opérateurs.

Il est connu pour éviter les arêtes vives sur les formes extrudées des profilés, de former des rayons de raccordement entre les surfaces planes qui limitent les risques de blessure pour les opérateurs.

Toutefois le berceau peut présenter des surfaces fonctionnelles, notamment pour fixer ce berceau ou recevoir des éléments rapportés, que l'on forme directement par des surfaces extrudées des profilés présentant une bonne géométrie, sans retouche d'usinage, afin d'obtenir les meilleurs coûts.

Ces surfaces fonctionnelles doivent présenter une certaine dimension utile afin d'assurer la qualité de la fixation, en particulier dans la direction transversale par rapport au sens d'extrusion du profilé.

Dans le cas où l'on raccorde une surface fonctionnelle avec une face adjacente plane venant de l'extrusion en formant un angle entre elles, on doit alors ajouter une épaisseur sur cette face adjacente correspondant au rayon de raccordement, pour maintenir la dimension transversale utile de la surface fonctionnelle. Ce décalage de la face adjacente entraîne une augmentation du volume de matière utilisé, ce qui accroit la masse de la structure porteuse ainsi que son coût.

Par ailleurs, on cherche à optimiser le dessin des profilés pour réduire la surface de la section transversale, afin de diminuer la masse du véhicule ainsi que les coûts.

La présente invention a notamment pour but d'éviter ces inconvénients de la technique antérieure.

Elle propose à cet effet un profilé réalisé en alliage métallique extrudé prévu pour une structure porteuse d'un véhicule automobile, ce profilé présentant formée directement par l'extrusion, une surface fonctionnelle disposant dans un plan transversal d'une dimension transversale utile, et une face adjacente formant un angle avec cette surface fonctionnelle, ce profilé étant remarquable en ce qu'il comporte un rayon de raccordement entre la surface fonctionnelle et la face adjacente, et en ce que la face adjacente présente un creux comprenant une concavité formée juste après le rayon de raccordement.

Un avantage de ce profilé est qu'à partir d'une dimension transversale utile de la surface fonctionnelle, il ajoute un minimum de matière pour réaliser le rayon de protection avec la face adjacente, grâce au creux de cette face adjacente qui intervient juste après le rayon. On obtient un profilé assurant à la fois la sécurité, ainsi qu'une masse et un coût minimum.

Par ailleurs le creux après un rayon de raccordement réduit la surface de la section transversale du profilé, ce qui diminue la masse de ce profilé.

Le profilé selon l'invention peut comporter de plus une ou plusieurs des caractéristiques suivantes, qui peuvent être combinées entre elles.

En particulier la face adjacente peut constituer une épaisseur de matière du profilé présentant d'un côté la surface fonctionnelle et de l'autre côté une face arrière.

Dans ce cas, avantageusement la face adjacente comporte de chaque côté un rayon de raccordement avec la surface fonctionnelle et avec la face arrière.

En particulier, le creux peut présenter un rayon constant.

En particulier, l'épaisseur de matière du profilé peut être inférieure à 10mm, et la valeur du rayon de raccordement peut être inférieure à 1mm.

Avantageusement, le fond du creux est aligné sur la perpendiculaire passant par le bord de la surface fonctionnelle.

Selon un mode de réalisation, la surface fonctionnelle constitue une surface de serrage d'une vis, comportant au centre un perçage.

L'invention a aussi pour objet une structure porteuse pour un véhicule automobile comportant un profilé comprenant l'une quelconque des caractéristiques précédentes, remarquable en ce que la surface fonctionnelle et son bord adjacent constituent un bossage formant un rail de guidage d'une vis de serrage de cette structure.

Dans ce cas, le profilé peut comporter deux rails de guidage présentant deux faces adjacentes disposées en vis-à-vis l'une de l'autre, comportant un perçage venant en partie sur chacune d'elle, qui reçoit la vis de serrage.

L'invention a de plus pour objet un véhicule automobile équipé d'un berceau de train avant, constituant une structure porteuse contenant un profilé présentant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue en perspective d'un profilé selon l'art antérieur, comportant une surface fonctionnelle et une face adjacente reliées par un angle vif ;
- la figure 2 est une vue partielle en coupe transversale d'une première variante selon l'art antérieur de ce profilé, recevant un rayon de raccordement entre la surface fonctionnelle et la face adjacente ;
- la figure 3 est une vue partielle en coupe transversale d'une deuxième variante selon l'invention de ce profilé ;
- les figures 4 et 5 présentent un autre profilé selon l'invention, comportant des rails de guidage facilitant l'introduction d'une vis au travers ; et
- la figure 6 est une vue de détail des rails de guidage de ce profilé.

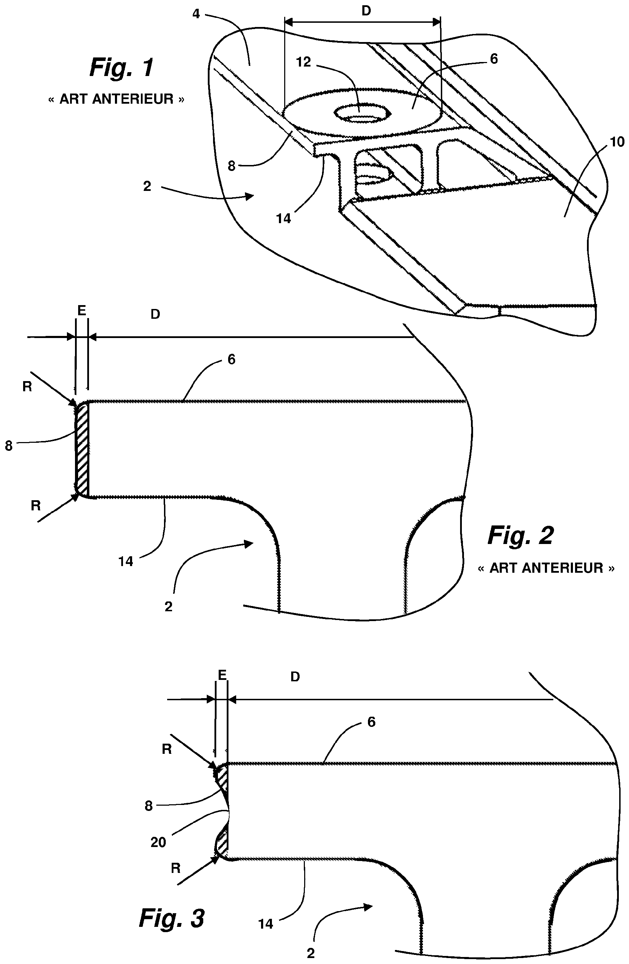

La figure 1 présente un profilé 2 réalisé par extrusion d'un alliage d'aluminium, prévu pour réaliser un berceau avant d'un véhicule automobile, comportant une section constante qui a subi des usinages sur le dessus afin de former un plateau 10 sur une partie avant de sa longueur.

La face supérieure 4 de la partie arrière restant brute de filage, comporte une surface fonctionnelle circulaire 6 présentant un diamètre D, formant un appui rigide comprenant au milieu un perçage vertical 12 prévu pour recevoir une fixation d'un équipement sur le berceau avant.

La géométrie ainsi que l'état de surface de la face supérieure 4 du profilé 2, sont suffisants pour permettre directement la fixation de l'équipement sur la surface fonctionnelle 6, sans avoir à la retoucher après le filage de ce profilé.

Le profilé 2 comporte des parois présentant une épaisseur sensiblement constante, qui peut être d'environ 3 à 5mm. La face supérieure 4 se termine sur un côté par une face adjacente perpendiculaire 8 formée par la tranche de l'épaisseur du profilé, qui vient juste au bord de la surface fonctionnelle nécessaire 6 afin d'utiliser un minimum de matière.

On a alors un angle droit présentant une arrête vive qui peut être blessante, entre la face supérieure 4 et la face adjacente 8.

De la même manière une face arrière 14 disposée parallèlement sous la face supérieure 4, est raccordée à la face adjacente 8 par une arête vive.

La figure 2 présente une première variante de ce profilé 2. On a ajouté sur la face adjacente 8 une épaisseur constante E permettant de réaliser un rayon de raccordement R avec la surface fonctionnelle 6 et avec la face arrière 14, sans toucher à la dimension transversale de cette surface égale au diamètre D.

En particulier on peut réaliser pour une épaisseur du profilé formant la face adjacente 8 inférieure à 10mm, qui est d'environ 3 à 5mm, un rayon R inférieur à 1mm, qui est d'environ 0,4 à 0,6mm. On ajoute ainsi une épaisseur de matière égale à ce rayon sensiblement sur toute la face adjacente 8, présentée sur la figure 2 par des hachures.

La figure 3 présente une deuxième variante de ce profilé 2. La face adjacente 8 est raccordée à la surface fonctionnelle 6 ainsi qu'à la face arrière 14 par le rayon de raccordement R.

Un creux central 20 formé entre les deux rayons de raccordement R, forme une concavité présentant un rayon constant qui relie directement ces deux rayons de raccordement. Le fond du creux 20 est aligné sur la perpendiculaire passant par le bord de la surface fonctionnelle 6, de manière à ne pas réduire la quantité de matière disposée en-dessous de cette surface fonctionnelle pour assurer sa rigidité.

On obtient à la fois des rayons de raccordement R des deux côtés de la face adjacente 8 assurant la sécurité, ainsi qu'un minimum de matière entre ces rayons, présenté par les surfaces hachurées, pour réduire la masse et les coûts du profilé sans diminuer la résistance de la surface fonctionnelle 6.

Le profilé selon l'invention s'applique en particulier pour former un berceau avant de véhicule automobile, constituant une structure porteuse fixée sous la caisse du véhicule, recevant le groupe motopropulseur ainsi que des éléments de suspension et de direction. Les efforts appliqués sur le berceau avant peuvent être très importants.

La surface fonctionnelle 6 du profilé 2 peut constituer en particulier une surface d'appui recevant l'appui d'un boîtier de direction fixé sur le berceau avant du véhicule, une vis de serrage de ce boîtier étant engagée dans le perçage 12. La face adjacente 8 forme une bordure de cette surface fonctionnelle 6.

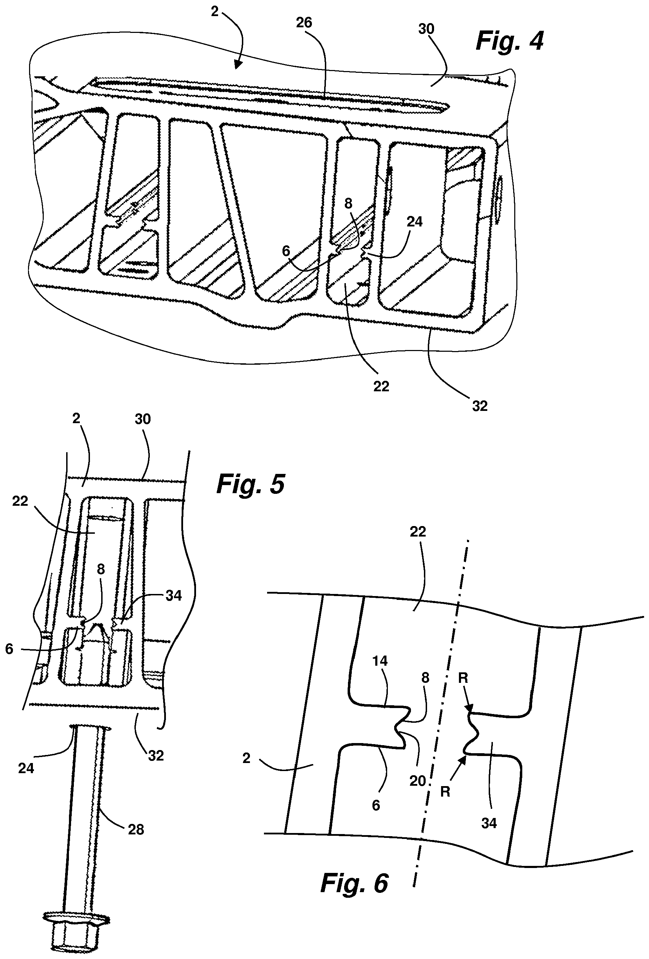

Les figures 4, 5 et 6 présentent un profilé 2 comportant dans la section transversale une face supérieure 30 et une face inférieure 32 parallèles, reliées par une succession d'alvéoles. Une alvéole de passage 22 présente une forme sensiblement rectangulaire, allongée perpendiculairement à ces faces parallèles 30, 32.

L'alvéole de passage 22 constitue un passage recevant une vis de serrage 28, qui est introduite perpendiculairement dans la face inférieure 32 par un perçage inférieur 24, pour ressortir au travers de la face supérieure 30 par un perçage supérieur réalisé dans une rainure transversale 26 usinée sur la face supérieure du profilé 2. Le fond de la rainure transversale 26 constitue une surface d'appui pour des paliers de barre anti-devers, présentant une hauteur ajustée par la profondeur d'usinage de cette rainure.

L'alvéole de passage 22 comporte à l'intérieur sensiblement au tiers inférieur, de chaque côté un rail de guidage 34 formé directement par l'extrusion du profilé 2.

Les deux rails de guidage 34 disposés l'un en face de l'autre, reçoivent un perçage de guidage prolongeant le perçage inférieur 24, pour constituer un guidage laissant passer de manière ajustée la vis de serrage 28. A partir du perçage inférieur 24 aligné dessus, le perçage de guidage dirige la vis de serrage 28 dans l'axe de l'alvéole de passage 22, pour ressortir facilement par le perçage supérieur.

L'opérateur ayant introduit la vis de serrage 28 par le perçage 24 sous le profilé 2, ressort l'extrémité avant de cette vis au-dessus de la face supérieure 30 en présentant une orientation perpendiculaire à cette face grâce au guidage entre les rails parallèles 34.

Les faces inférieures des rails de guidage 34 constituent des faces fonctionnelles 6 qui doivent présenter une certaine largeur utile pour recevoir le perçage de guidage permettant de guider la vis de serrage 28. Les faces adjacentes 8 à ces faces fonctionnelles 6, tournées l'une vers l'autre pour les deux rails de guidage 34, comportent chacune un rayon de raccordement R avec la face fonctionnelle 6 et avec la face arrière 14, et entre ces rayons un creux 20 qui réduit la quantité de matière.

On obtient des rails de guidage 34 présentant un minimum de matière ajoutée.

On notera que les profilés selon l'invention nécessitant seulement une modification mineure des filières d'extrusion de la matière, ne changent pas le procédé de fabrication ni les méthodes d'assemblage pour réaliser une structure porteuse. Le coût global de la structure porteuse reste similaire.

## Revendications

1. Profilé réalisé en alliage métallique extrudé prévu pour une structure porteuse d'un véhicule automobile, ce profilé (2) présentant formée directement par l'extrusion, une surface fonctionnelle (6) disposant dans un plan transversal d'une dimension transversale utile (D), et une face adjacente (8) formant un angle avec cette surface fonctionnelle (6), **caractérisé en ce qu'**il comporte un rayon de raccordement (R) entre la surface fonctionnelle (6) et la face adjacente (8), et **en ce que** la face adjacente (8) présente un creux (20) comprenant une concavité formée juste après le rayon de raccordement (R).

2. Profilé selon la revendication 1, **caractérisé en ce que** la face adjacente (8) constitue une épaisseur de matière du profilé (2) présentant d'un côté la surface fonctionnelle (6) et de l'autre côté une face arrière (14).

3. Profilé selon la revendication 2, **caractérisé en ce que** la face adjacente (8) comporte de chaque côté un rayon de raccordement (R) avec la surface fonctionnelle (6) et avec la face arrière (14).

4. Profilé selon la revendication 3, **caractérisé en ce que** le creux (20) présente un rayon constant.

5. Profilé selon l'une quelconque des revendications 2 à 4, **caractérisé en ce que** l'épaisseur de matière du profilé (2) est inférieure à 10mm, et la valeur du rayon de raccordement (R) est inférieure à 1mm.

6. Profilé selon l'une quelconque des revendications précédentes, **caractérisé en ce que** le fond du creux (20) est aligné sur la perpendiculaire passant par le bord de la surface fonctionnelle (6).

7. Profilé selon l'une quelconque des revendications précédentes, **caractérisé en ce que** la surface fonctionnelle (6) constitue une surface de serrage d'une vis, comportant au centre un perçage (12).

8. Structure porteuse pour un véhicule automobile comportant un profilé (2) selon l'une quelconque des revendications précédentes, **caractérisé en ce que** la surface fonctionnelle (6) et son bord adjacent (8) constituent un bossage formant un rail de guidage (34) d'une vis de serrage (28) de cette structure.

9. Structure porteuse selon la revendication 8, **caractérisé en ce que** le profilé (2) comporte deux rails de guidage (34) présentant deux faces adjacentes (8) disposées en vis-à-vis l'une de l'autre, comportant un perçage venant en partie sur chacune d'elle, qui reçoit la vis de serrage (28).

10. Véhicule automobile équipé d'un berceau de train avant, **caractérisé en ce que** ce berceau constitue une structure porteuse contenant un profilé (2) selon l'une quelconque des revendications 1 à 7.

## Patentansprüche

1. Profil aus extrudierter Metalllegierung, die für eine Tragstruktur eines Kraftfahrzeugs vorgesehen ist, wobei dieses Profil (2) direkt durch die Extrusion gebildet wurde , eine Funktionsfläche (6) in einer Querebene eine nützliche Querabmessung (D) aufweist und eine benachbarte Fläche (8) einen Winkel mit dieser Funktionsfläche bildet (6), **dadurch gekennzeichnet, dass** sie einen Verbindungsradius umfaßt (R) zwischen der Funktionsfläche (6) und der benachbarten Fläche (8) ist, und daß die benachbarte Fläche (8) hat eine Mulde (20) umfassend eine Konkavität, die unmittelbar nahe dem Verbindungsradius (R) gebildet ist.

2. Profil in nach Anspruch 1, **dadurch gekennzeichnet, dass** die benachbarte Fläche (8) bildet, eine Materialdicke des Profils (2), der auf den einer Seite die Funktionsfläche (6) und auf der anderen Seite eine hintere Fläche (14).

3. Profil nach Anspruch 2, **dadurch gekennzeichnet, dass** die benachbarte Fläche (8) auf jeder Seite einen Verbindungsradius (R) mit der Funktionsfläche (6) und mit der Rückseite (14) aufweist.

4. Profil nach Anspruch 3, **dadurch gekennzeichnet, dass** der Hohlraum (20) einen konstanten Radius aufweist.

5. Profil nach einem der Ansprüche 2 bis 4, **gekennzeichnet dadurch, dass** die Materialdicke des Profils (2) weniger als 10 mm und der Wert des Verbindungsradius (R) weniger als 1 mm beträgt.

6. Profil nach einem der vorhergehenden Ansprüche, **gekennzeichnet dadurch, dass** der Boden des Hohlraums (20) mit der Senkrechten ausgerichtet ist, die durch den Rand der Funktionsfläche (6) verläuft.

7. Profil nach einem der der vorhergehenden Ansprüche, **dadurch gekennzeichnet, dass** die Funktionsfläche (6) bildet eine Klemmschraube Fläche an einer Bohrungsmitte (12) umfasst.

8. Tragstruktur für ein Kraftfahrzeug mit einem Profil (2) nach einem der vorhergehenden Ansprüchen, **dadurch gekennzeichnet, dass** die Funktionsfläche (6) und die benachbarte Kante (8) einen Vorsprung bilden fo RMED einer Schienenführung (34) einer Spannschraube (28) dieser Struktur.

9. Tragstruktur nach Anspruch 8, **dadurch gekennzeichnet, dass** das Profil (2) aus zwei Führungsschienen (34), die zwei benachbarte Seiten (8) angeordnet sind sie gegenüberliegend, umfassend eine Bohrung von teilweise auf jedem von ihnen kommen, die erhalten die Klemmschraube (28).

10. Kraftfahrzeug, das mit einer Vorderachshalterung ausgestattet ist, **dadurch gekennzeichnet, dass** diese Halterung eine tragende Struktur darstellt, die einen Abschnitt (2) gemäß einem der Ansprüche 1 bis 7 enthält.

## Claims

1. Profile made of extruded metal alloy intended for a supporting structure of a motor vehicle, this profile (2) having formed directly by the extrusion, a functional surface (6) having in a transverse plane a useful transverse dimension (D), and an adjacent face (8) forming an angle with this functional surface (6), **characterized in that** it comprises a connecting radius (R) between the functional surface (6) and the adjacent face (8), and **in that** the adjacent face (8) has a hollow (20) comprising a concavity formed just near the connecting radius (R).

2. Profile according to claim 1, **characterized in that** the adjacent face (8) constitutes a material thickness of the profile (2) having on one side the functional surface (6) and on the other side a rear face (14).

3. Profile according to claim 2, **characterized in that** the adjacent face (8) has on each side a connecting radius (R) with the functional surface (6) and with the rear face (14).

4. Profile according to claim 3, **characterized in that** the hollow (20) has a constant radius.

5. Profile according to any one of claims 2 to 4, **characterized in that** the material thickness of the profile (2) is less than 10mm, and the value of the connection radius (R) is less than 1mm.

6. Profile according to any one of the preceding claims, **characterized in that** the bottom of the hollow (20) is aligned with the perpendicular passing through the edge of the functional surface (6).

7. Profile according to any one of the preceding claims, **characterized in that** the functional surface (6) constitutes a clamping screw surface, comprising at a bore center (12).

8. Support structure for a motor vehicle comprising a profile (2) according to any one of the preceding claims, **characterized in that** the functional surface (6) and the adjacent edge (8) constitute a boss fo rmed a rail guide (34) of a tightening screw (28) of this structure.

9. Support structure according to claim 8, **characterized in that** the profile (2) comprises two guide rails (34) having two adjacent faces (8) arranged opposite one another, comprising a bore coming from partly on each of them, which receives the clamping screw (28).

10. Motor vehicle equipped with a front axle cradle, **characterized in that** this cradle constitutes a supporting structure containing a section (2) according to any one of claims 1 to 7.
